# EUROPEAN PATENT SPECIFICATION

(11) **EP 3 941 122 B1**
(45) Date of publication and mention of the grant of the patent: **26.02.2025**
(21) Application number: 19918569.5
(22) Date of filing: 11.03.2019
(51) Int. Cl.: H04W 52/02, H04L 65/1059, H04L 65/1016

(54) **DATA SENDING METHOD, TERMINAL DEVICE, AND STORAGE MEDIUM**
DATENSENDEVERFAHREN, ENDGERÄT UND SPEICHERMEDIUM
PROCÉDÉ D'ENVOI DE DONNÉES, DISPOSITIF TERMINAL, ET SUPPORT DE STOCKAGE

(43) Date of publication of application: 19.01.2022
(73) Proprietor: Spreadtrum Communications (Shanghai) Co., Ltd., Shanghai 201203 (CN)
(72) Inventor: HE, Yi, Shanghai 201203 (CN); CHEN, Xianliang, Shanghai 201203 (CN); GAO, Xichun, Shanghai 201203 (CN); WEI, Xia, Shanghai 201203 (CN); SHI, Yanshan, Shanghai 201203 (CN); WANG, Qiang, Shanghai 201203 (CN)
(74) Representative: Valea AB
(86) International application number: PCT/CN2019/077721
(87) International publication number: WO 2020/181472

(56) References cited:
- CN-A- 104 869 666
- CN-A- 105 392 165
- CN-A- 107 333 304
- CN-A- 107 634 785
- US-A1- 2014 286 308
- US-A1- 2015 033 300
- US-A1- 2016 170 004
- US-A1- 2018 019 970

## Description

### TECHNICAL FIELD

Embodiments of the present application relate to communication technology and, in particular, to a data sending method, a terminal device and a storage medium.

### BACKGROUND

There is a communication processor (CP) and an application processor (AP) included in a terminal device, where usually, the CP is mainly used to process wireless communication and other functions, for example, the terminal communicates with a network device through new radio (NR)/long term evolution (LTE), and the AP mainly processes application related functions. NR, which is the fifth generation (5G) communication standard proposed by the 3rd Generation Partnership Project (3GPP), is usually referred to as 5G new radio.

In prior art, since wireless-fidelity (Wi-Fi) is linked to the AP, when the terminal device sends data to the network device through a Wi-Fi network, the CP of the terminal device needs to first send data that needs to be sent to the AP through a channel between AP/CP, and then these data is sent out through the Wi-Fi network by the AP. "Wireless-Fidelity" is a name of the Wi-Fi technology proposed by the Wi-Fi Alliance in the early days, and is simply represented by Wi-Fi at present.

However, since in the prior art, after the CP sends data to the AP, it is the AP that sends the data to the network device, thereby increasing power consumption of the AP.

US2014/286308A1 discloses a method in an electronic device, comprises, in response to an Internet Protocol (IP) voice packetized data call being performed in a first call session of a first communication processor and occurrence of a handover event from the first communication processor to a second communication processor, receiving at least one of, (a) a control message and (b) IP packetized voice data, via the second communication processor.

US2018/019970A1 discloses a communication device of handling a CWIP comprises instructions of having a cellular connection with a base station (BS) of a cellular network; receiving a first Internet Protocol (IP) address from the BS via the cellular connection; receiving a CWIP configuration configuring a second IP address for establishing a first IPsec tunnel for the CWIP from the BS; having a WLAN connection with a WLAN, and receiving a third IP address for transmitting at least one IP packet via the WLAN, from the WLAN via the WLAN connection; establishing the first IPsec tunnel via the WLAN connection to the second IP address by using the third IP address; generating a first IP packet of the at least one IP packet and setting a source IP address of the first IP packet to the first IP address; and transmitting the first IP packet to the BS via the first IPsec tunnel.

US2015/033300A1 discloses a communication device configured to provide Web real-time communication (WebRTC) for internet protocol (IP) multimedia services utilizing one or more 3GPP protocols. The communication device can also be configured to convert communications between WebRTC and 3GPP protocols utilizing Traversal Using Relays around Network Address Translation (TURN) functionality implemented within the communication device

### SUMMARY

The invention is set out in the appended set of claims. The embodiments of the present application provide a data sending method, a terminal device and a storage medium to reduce power consumption of an AP.

According to a first aspect, an embodiment of the present application provides a data sending method applied to a terminal device according to claim 1.

Optionally, the to-be-sent data includes at least one of the following: session initiation protocol SIP signaling, voice data, video data, access stratum AS data and non-access stratum NAS data.

Optionally, the to-be-sent data includes session initiation protocol SIP signaling; and
the acquiring, by the CP of the terminal device, the to-be-sent data includes:
receiving, by the CP of the terminal device, the session initiation protocol SIP signaling from an application processor AP of the terminal device; or,
acquiring, by the CP of the terminal device, the session initiation protocol SIP signaling locally.

Optionally, the to-be-sent data includes voice data; and
the acquiring, by the CP of the terminal device, the to-be-sent data includes:
receiving, by the CP of the terminal device, the voice data from the application processor AP of the terminal device; or,
acquiring, by the CP of the terminal device, the voice data locally.

Optionally, the to-be-sent data includes video data;
the acquiring, by the CP of the terminal device, the to-be-sent data includes:
receiving, by the CP of the terminal device, the video data from the application processor AP of the terminal device.

Optionally, the non-cellular mobile communication network includes a wireless-fidelity Wi-Fi network.

According to a second aspect, an embodiment of the present application provides a terminal device according to claim 7.

Optionally, the to-be-sent data includes at least one of the following: session initiation protocol SIP signaling, voice data, video data, access stratum AS data and non-access stratum NAS data.

Optionally, the to-be-sent data includes session initiation protocol SIP signaling; and
the CP of the terminal device is specifically configured to:
receive the session initiation protocol SIP signaling from an application processor AP of the terminal device; or
acquire the session initiation protocol SIP signaling locally.

Optionally, the to-be-sent data includes voice data; and
the CP of the terminal device is specifically configured to:
receive the voice data from the application processor AP of the terminal device; or
acquire the voice data locally.

Optionally, the to-be-sent data includes video data; and
the CP of the terminal device is specifically configured to:
receive the video data from the application processor AP of the terminal device.

Optionally, the non-cellular mobile communication network includes a wireless-fidelity Wi-Fi network.

According to a third aspect, an embodiment of the present application provides a computer-readable storage medium according to claim 11.

According to the data sending method, terminal device and storage medium provided by the present application, the CP of the terminal device acquires the to-be-sent data, and the CP sends the acquired to-be-sent data through the non-cellular mobile communication network. After acquiring the to-be-sent data, the CP does not have to send the to-be-sent data to the AP, but directly sends the to-be-sent data through the non-cellular mobile communication network, thus avoiding the need to wake up the AP, thereby helping to reduce the power consumption of the AP.

### BRIEF DESCRIPTION OF DRAWINGS

In order to explain the technical solutions in the embodiments of the present application or the prior art more clearly, the accompanying drawings that need to be used in the description of the embodiments or the prior art will be briefly introduced below. Obviously, the accompanying drawings in the following description are some embodiments of the present application. For those of ordinary skill in the art, other drawings can be obtained based on these drawings without paying creative efforts.
FIG. 1 is a schematic diagram of a systematic architecture for sending data by a terminal device in prior art;
FIG. 2 is a schematic diagram of a possible systematic architecture provided by an embodiment of the present application;
FIG. 3 is a schematic flowchart of a first embodiment of a data sending method provided by an embodiment of the present application;
FIG. 4 is a schematic flowchart of a second embodiment of a data sending method provided by an embodiment of the present application;
FIG. 5 is a schematic diagram of establishment of a non-cellular mobile communication network link;
FIG. 6 is a schematic structural diagram of a first embodiment of a terminal device provided by the present application; and
FIG. 7 shows a possible schematic structural diagram of a terminal device of the present application.

### DESCRIPTION OF EMBODIMENTS

In order to make the objectives, technical solutions and advantages of the embodiments of the present application clearer, the technical solutions in the embodiments of the present application will be described clearly and completely below in conjunction with the accompanying drawings in the examples of the present application. The invention is defined by the appended claims. "Embodiments" in the description which do not fall within the scope as defined by the claims shall be seen as illustrative examples for a better understanding of the invention.

The terms "first", "second", "third" , "fourth" and the like (if any) in the description, the claims and the above-mentioned accompanying drawings of the present application are used to distinguish similar objects, and do not need to be used to describe a specific order or sequence. It should be understood that the data used in this way can be interchanged under appropriate circumstances, so that the embodiments of the present application described herein can be implemented in a sequence other than those illustrated or described herein. In addition, the terms "including" and "having" and any of their variations are intended to cover non-exclusive inclusions. For example, a process, method, system, product, or device that includes a series of steps or units is not necessary to be limited to those steps or units clearly listed, but may include other steps or units that are not clearly listed or are inherent to these process, method, product, or device.

A data sending method provided by an embodiment of the present application can be applied to an application scenario where a terminal device sends data to a network device through a non-cellular mobile communication network. The terminal device can be a wireless terminal device that receives scheduling and indication information of the network device, for example, can be a mobile phone, a cell phone, a computer or a data card. The network device is a device used to communicate with a mobile device, such as a base station (NodeB), etc. The network device can merely include a Wi-Fi network device, or can include a Wi-Fi network device and a network device in a cellular mobile communication network, or can also include a Wi-Fi network device and a network device in an IMS network, or can also include a Wi-Fi network device, a network device in a cellular mobile communication network and a network device in an IMS network. The cellular mobile communication network can be a cellular mobile communication network defined by a specification of the 3rd Generation Partnership Project (3GPP), and the non-cellular mobile communication network is a network, such as a Wi-Fi network or Ethernet, etc. other than the cellular mobile communication networks defined by the 3GPP specifications, such as mobile communication technology of the 3rd generation (3G), mobile communication technology of the 4th generation (4G), cellular mobile communication technology of the 5th generation (5th Generation Wireless Systems, 5G), mobile communication technology of the 6th generation (6G) and the like.

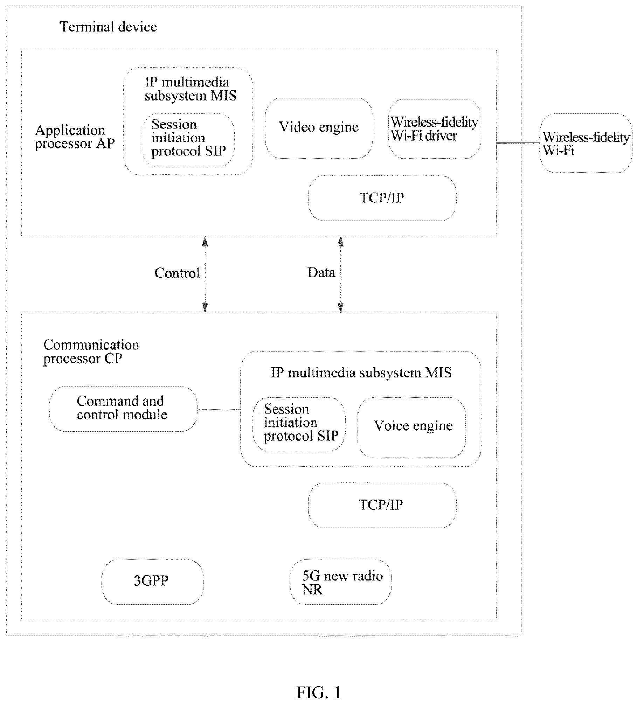

With the evolution of communication protocols, the relationship between Wi-Fi and mobile communication has become closer and closer. As an access way, a terminal can access a cellular mobile communication network through Wi-Fi. For example, VoWi-Fi is that a terminal communicates with a non-cellular mobile communication network through Wi-Fi, and provides IP-multimedia-based voice, video and other multimedia functions, and short message service (SMS) and other functions by an IMS of the terminal device and an IMS of the network device. A 5G NAS message can also communicate with a core network (CN) of a non-cellular mobile communication network through Wi-Fi. As an access technology for terminals, Wi-Fi has an increasingly closer relationship with the traditional 3GPP access technologies, such as 2G, 3G, 4G or 5G. For example, due to changes in wireless conditions, switching mutually between Wi-Fi and these technologies of 3GPP are required. FIG. 1 is a schematic diagram of a systematic architecture for sending data by a terminal device in the prior art. As shown in FIG. 1, in the prior art, an IP multimedia subsystem (IMS), a wireless-fidelity (Wi-Fi) driver, a video engine and a TCP/IP module are included in an AP, and a command and control module and an IMS and TCP/IP module are included in a CP. The IMS in the AP is configured to process session initiation protocol (SIP) signaling, the Wi-Fi driver is configured to control the communication between the terminal device and Wi-Fi, and the video engine is configured to generate or process video data, and the TCP/IP module in the AP and the TCP/IP module in the CP are configured to send data according to a TCP/IP protocol. In addition, the command and control module in the CP is configured to control the communication between the AP and the CP, and an SIP processing module and a voice engine are included in the IMS, where the SIP processing module is configured to generate and process SIP signaling, and the voice engine is configured to generate or process audio data. In addition, the CP can perform data communication through a wireless access technology with a cellular mobile communication network defined by a specification of the 3rd Generation Partnership Project (3GPP), where the cellular mobile communication network can be, for example, a 3G, 4G, 5G or 6G network.

It can be seen from the above content that, currently, signaling related to terminals and communications are mainly processed in a CP, and voice data for a non-cellular mobile communication network is also mainly processed in the CP. If Wi-Fi, as a terminal access technology, communicates with a network, a Wi-Fi processor of the terminal can only communicate directly with the AP, all signaling and data of the CP can only be forwarded by the AP. That is, since the Wi-Fi is linked to the AP, when the terminal device sends data to the network device through a Wi-Fi network, the CP of the terminal device needs to send the data to the AP first via a path between the AP/CP, and then send the data out by the AP through the Wi-Fi network. Since the AP needs to be waked up when data is sent and the data is sent to the network device by the AP, for example, in an existing scheme, if an IMS protocol stack is in the CP when VoWi-Fi, and both signaling and voice processing are in the CP when Vo Wi-Fi, the AP will be waked up when signaling/voice data is sent, so that the power consumption of the AP will be increased.

In embodiments of the present application, in consideration of the foregoing problems, a data sending method is proposed. A CP of a terminal device acquires to-be-sent data, and the CP sends the acquired to-be-sent data through a non-cellular mobile communication network. After acquiring the to-be-sent data, the CP does not need to send the to-be-sent data to an AP, but directly sends the data to a network device through the non-cellular mobile communication network, thus avoiding the need to wake up the AP, thereby helping to reduce the power consumption of the AP.

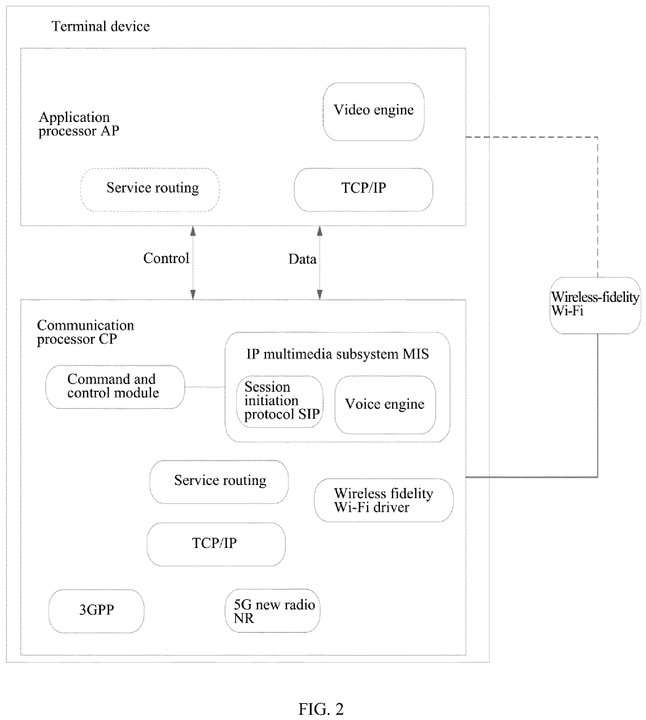

FIG. 2 is a schematic diagram of a possible systematic architecture provided by an embodiment of the present application. As shown in FIG. 2, a video engine and a TCP/IP module are included in an AP, and a command and control module, an IMS, a Wi-Fi driver, and a service routing and a TCP/IP module are included in a CP. The video engine in the AP is configured to generate or process video data, and the TCP/IP module in the AP and the TCP/IP module in the CP are configured to send data according to a TCP/IP protocol. In addition, the command and control module in the CP is configured to control communication between the AP and the CP, and an SIP processing module and a voice engine are included in the IMS, where the SIP processing module is configured to generate and process SIP signaling, the voice engine is configured to generate or process audio data, the Wi-Fi driver is configured to control communication between the terminal device and Wi-Fi, and the service routing is configured to route to-be-sent data to a non-cellular mobile communication network or a cellular mobile communication network. In addition, the CP can perform data communication through a wireless access technology with a cellular mobile communication network defined by 3GPP. The cellular mobile communication network can be, for example, a 3G, 4G, 5G or 6G network.

In addition, the AP can also be configured to surf the Internet, upload or download data, etc.

It can be seen from FIG. 2 that in the embodiments of the present application, Wi-Fi can be linked to the CP, so that direct communication between the CP and the Wi-Fi can be supported, including supporting a Wi-Fi driver, a Wi-Fi signal, link management, security management and other functions in the CP. For data generated in the CP, if it is needed to be sent to the network device via the Wi-Fi, the to-be-sent data will not be sent to the AP first and then sent, but is directly sent to the network device through the CP of the terminal device via a Wi-Fi network, which can avoid waking up the AP when data is sent and helps to reduce the power consumption of the AP.

The technical solutions of the present application will be described in detail below with specific embodiments. The following specific embodiments can be combined with each other, and the same or similar concepts or processes may not be repeated again in some embodiments.

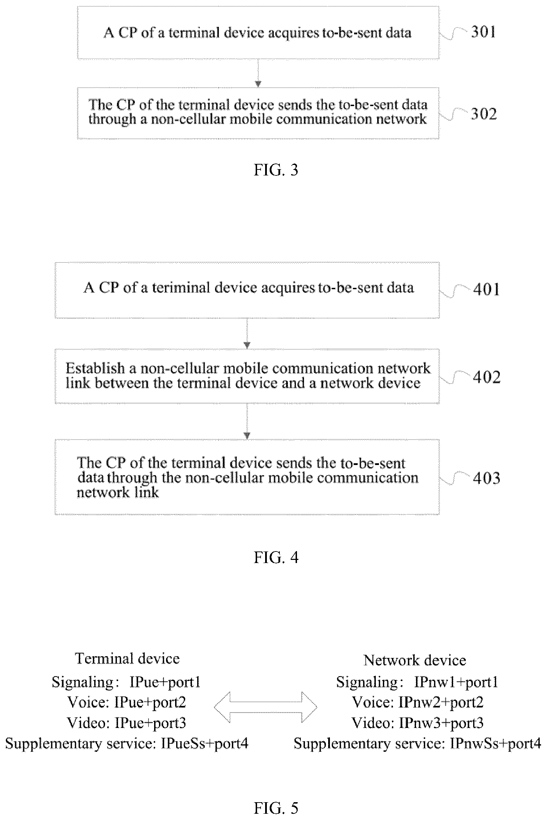

FIG. 3 is a schematic flowchart diagram of a first embodiment of a data sending method provided by an embodiment of the present application. The embodiment of the present application provides a data sending method. The method can be executed by any apparatus that executes the data sending method. The apparatus can be implemented by software and/or hardware. In the present embodiment, the apparatus may be integrated in a CP of a terminal device. As shown in FIG. 3, based on the architecture shown in FIG. 2, the data sending method provided by the embodiment of the present application includes the following steps:
step 301: the CP of the terminal device acquires to-be-sent data;
step 302: the CP of the terminal device sends the to-be-sent data through a non-cellular mobile communication network.

In the present embodiment, an AP and the CP are included in the terminal device, where the AP mainly processes application-related functions, and the CP is mainly configured to process wireless communication and other functions, which for example, the terminal communicates with a network device through NR/LTE.

In addition, the non-cellular mobile communication network can be linked to the CP. The non-cellular mobile communication network is a communication network other than 3G, 4G, 5G, 6G and other cellular mobile communication networks defined by the 3rd Generation Partnership Project (3GPP), which for example, can be a Wi-Fi network or Ethernet etc. After linking the non-cellular mobile communication network to the CP, when acquiring the to-be-sent data, the CP does not have to send it to the AP, but directly sends out the acquired to-be-sent data through the non-cellular mobile communication network, for example, to the network device. In this way, it can be avoided that the AP needs to be waked up and the to-be-sent data is sent by the AP, thereby helping to reduce the power consumption of the AP.

Optionally, the aforementioned to-be-sent data may include at least one of the following: session initiation protocol (SIP) signaling, voice data, video data, access stratum (AS) data and non-access stratum (NAS) data.

In a possible implementation, if SIP signaling is included in the to-be-sent data, the CP of the terminal device can acquire the to-be-sent data in the following way: the CP of the terminal device receives the SIP signaling from the AP of the terminal device; or, the CP of the terminal device acquires the SIP signaling locally.

Specifically, as shown in FIG. 2, if the SIP signaling is included in the to-be-sent data, and an IP multimedia subsystem (IMS) that processes SIP signaling is in the CP, the CP of the terminal device can acquire the SIP signaling from the CP locally, and send the acquired SIP signaling to the network device through the non-cellular mobile communication network.

Optionally, if SIP signaling is included in the to-be-sent data, and an IMS that processes the SIP signaling is in the AP, after the AP generates the SIP signaling, the CP of the terminal device will receive the SIP signaling from the AP of the terminal device, and send the received SIP signaling through the non-cellular mobile communication network, where the CP receiving the SIP signaling from the AP, can be that the AP sends the SIP signaling to the CP actively after generating the SIP signaling, or the CP sends a request message to the AP, and the AP sends the SIP signaling to the CP after receiving the request message.

In another possible implementation, if the to-be-sent data includes voice data, the CP of the terminal device can acquire the to-be-sent data in the following way: the CP of the terminal device receives the voice data from the AP of the terminal device; or, the CP of the terminal device acquires the voice data locally.

Specifically, as shown in FIG. 2, if voice data is included in the to-be-sent data, and the voice engine that processes the voice data is in the CP, the CP of the terminal device can acquire the voice data locally from the CP and send the acquired voice data through the non-cellular mobile communication network.

Optionally, if voice data is included in the to-be-sent data, and the voice engine that processes the voice data is in the AP, after the AP generates the voice data, the CP of the terminal device will receive the voice data from the AP of the terminal device, and send the received voice data through the non-cellular mobile communication network, for example, to the network device, where the CP receiving the voice data from the AP, can be that the AP sends the voice data actively to the CP after generating the voice data, or can also be that the CP sends a request message to the AP, and the AP sends the voice data to the CP after receiving the request message.

In another possible implementation, if video data is included in the to-be-sent data, the CP of the terminal device can acquire the to-be-sent data in the following way: the CP of the terminal device receives the video data from the AP of the terminal device.

Specifically, as shown in FIG. 2, if video data is included in the to-be-sent data, and the video engine that processes the video data is in the AP, after the AP generates the video data, the CP of the terminal device will receive the video data from the AP of the terminal device, and send the received video data through the non-cellular mobile communication network, for example, to the network device, where the CP receiving the video data from the AP, can be that the AP sends the video data to the CP actively after generating the video data, or can also be that the CP sends a request message to the AP, and the AP sends the video data to the CP after receiving the request message.

The embodiment of the present application provides a data sending method, where the CP of the terminal device acquires to-be-sent data, and the CP sends the acquired to-be-sent data through the non-cellular mobile communication network. Since after acquiring the to-be-sent data, the CP does not have to send the to-be-sent data to the AP, but directly sends it through the non-cellular mobile communication network, thus avoiding the need to wake up the AP, thereby helping to reduce the power consumption of the AP.

Furthermore, the Wi-Fi can also be linked to the AP and the CP at the same time. In this way, the AP can directly send the data generated by the AP to the network device via Wi-Fi, and the CP can directly send the data generated by the CP to the network device via Wi-Fi, thus can simplify the data sending process.

FIG. 4 is a schematic flow chart of a second embodiment of a data sending method provided by an embodiment of the present application. The present embodiment describes in detail, based on the embodiment shown in FIG. 3, the process that before sending to-be-sent data through a non-cellular mobile communication network, a CP needs to establish a non-cellular mobile communication network link between a terminal device and a network device. As shown in FIG. 4, the data sending method provided by the embodiment of the present application includes the following steps:
step 401: a CP of the terminal device acquires to-be-sent data; where
step 401 is similar to step 301, as for which specifically, reference may be made to the description in the above-described embodiment, which is not repeated here again; and
step 402: establishing a non-cellular mobile communication network link between the terminal device and the network device.

When the terminal device sends data to the network device, it is usually sent through a network link between the terminal device and the network device. If an established link between the terminal device and the network device is a non-cellular mobile communication network link, the terminal device will send the to-be-sent data to the network device through the non-cellular mobile communication network link; if the established link between the terminal device and the network device is a cellular mobile communication network link, the terminal device will send the to-be-sent data to the network device through the cellular mobile communication network link.

It should be noted that the terminal device can determine whether the terminal device resides in a cellular mobile communication network or a non-cellular mobile communication network through a preset condition, where the cellular mobile communication networks can include 3G, 4G, 5G NR or 6G networks and the like.

Exemplarily, the terminal device can determine whether a signal strength of the non-cellular mobile communication network is greater than a preset threshold, and if it is greater than the preset threshold, it is determined that the terminal device resides in a non-cellular mobile communication network; otherwise, it is determined that the terminal device resides in a cellular mobile communication network, where the preset threshold can be set according to actual conditions or experience. As for the specific value of the preset threshold, the embodiment of the present application does not make restriction herein.

When the terminal device determines that it resides in a non-cellular mobile communication network, the terminal device can establish the non-cellular mobile communication network link between the terminal device and the network device in the following way: the terminal device receives an internet protocol (IP) address sent by the network device, the terminal device determines port information of the terminal device, and the terminal device establishes, according to the IP address and the port information, the non-cellular mobile communication network link between the terminal device and the network device.

Specifically, the terminal device sends a request message to the network device, and the network device allocates resources related to an IMS service to the terminal device supporting the IMS service, including the IP address of the terminal device and an IP address of a network element relevant to an IMS network. The IP address of the terminal device is a destination address when the network device sends downlink data to the terminal device, and the IP address of the network element relevant to the IMS network is a destination address when the terminal device sends uplink data to the network device. It is worth noting that the aforementioned IP address sent by the network device received by the terminal device can include the IP address of the terminal device and the IP address of the network element relevant to the IMS network.

In addition, when sending data related to services such as signaling, voice, or video, etc. and establishing a link with the network device, the terminal device needs to determine the device can determine a set of IP addresses and port information of the terminal device, as well as a set of IP addresses of the network device and port information of the network device. In this way, based on these two sets of IP addresses and port information, one link between the terminal device and the network device can be established, such as establishing the non-cellular mobile communication network link between the terminal device and the network device. When the CP of the terminal device sends data, the to-be-sent data can be sent to the network device through the established non-cellular mobile communication network link.

For example, FIG. 5 is a schematic diagram of establishment of a non-cellular mobile communication network link. As shown in FIG. 5, if it is determined that an IP corresponding to SIP signaling on the terminal device side is IPue, port information is Port1, an IP corresponding to voice data is IPue, port information is Port2, an IP corresponding to video data is IPue, port information is Port3, an IP corresponding to a supplementary service is IPueSs, port information is Port4, an IP corresponding to SIP signaling on the network device side is IPnw1 and port information is Port1, an IP corresponding to voice data is IPnw2, port information is Port2, an IP corresponding to video data is IPnw3, port information is Port3, an IP corresponding to supplementary service is IPnwSs, port information is Port4. IPue is the IP assigned by the network device to the terminal device, that is, the IP address of the IMS service corresponding to the terminal device, and IPnw is the IP address of the network element relevant to the IMS network.

According to one set of IP address and port information corresponding to the terminal device, and one set of IP address and port information corresponding to the network device, one link can be determined, for example, IPue and Port1, and IPnw1 and Port1 form a link, which can be a non-cellular mobile communication network link, or can also be a cellular mobile communication network link.

It should be noted that the aforementioned port information of the terminal device and that of the network device are determined independently of each other. In addition, different services of the IMS of the network device may be communication between different network elements and the terminal device, thus the IP addresses corresponding to different services may be the same or different. Different services of the IMS of the terminal device may also use different IPs. For example, for supplementary service configuration, an IP corresponding to a service transmitting data may be used, or an IP not only different from an IP of the service transmitting data, but also different from an IP of the IMS may also be used.

It is worth noting that execution orders of step 401 and step 402 are not limited in the embodiments of the present application. It can be that step 401 is first executed, and then step 402 is executed, or step 402 is first executed, and then step 401 is executed, or step 401 and step 402 are executed at the same time.

Step 403: the CP of the terminal device sends the to-be-sent data through the non-cellular mobile communication network link.

In this step, after the non-cellular mobile communication network link between the terminal device and the network device is established, the CP of the terminal device can send the to-be-sent data to the network device through the established non-cellular mobile communication network link.

According to the data sending method provided by the embodiment of the present application, the CP of the terminal device acquires the to-be-sent data, the terminal device receives the IP address sent by the network device, determines the port information of the terminal device, and then establishes, according to the IP address and the port information, the non-cellular mobile communication network link between the terminal device and the network device, and the CP of the terminal device sends the to-be-sent data through the non-cellular mobile communication network link. The non-cellular mobile communication network link can be established first by virtue of the IP address and the port information, and the to-be-sent data can be sent through the established non-cellular mobile communication network link, thus rendering the data transmission method more simple and convenient.

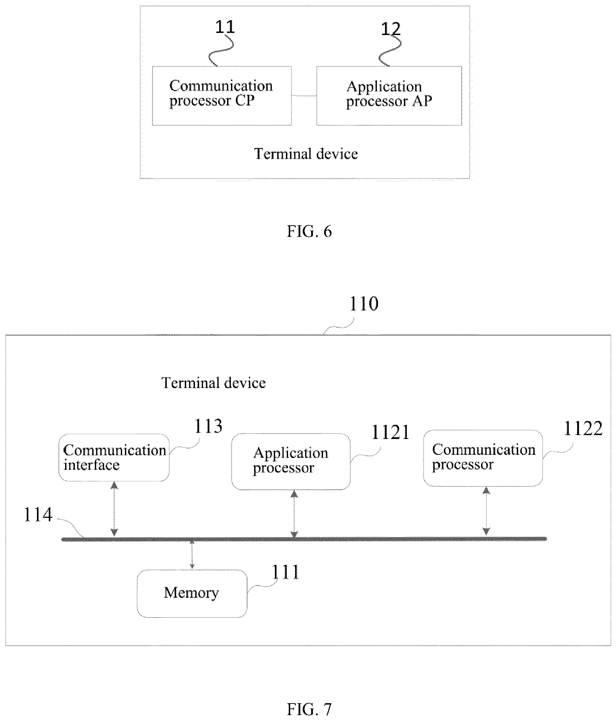

FIG. 6 is a schematic structural diagram of a first embodiment of a terminal device provided by the present application. The terminal device includes a communication processor CP 11 and an application processor AP 12, where:
the CP 11 of the terminal device is configured to acquire to-be-sent data; and
the CP 11 of the terminal device is further configured to send the to-be-sent data through a non-cellular mobile communication network.

According to the terminal device provided by the embodiment of the present application, the CP of the terminal device acquires the to-be-sent data, and the CP sends the acquired to-be-CP 11 and an application processor AP 12, where:
the CP 11 of the terminal device is configured to acquire to-be-sent data; and
the CP 11 of the terminal device is further configured to send the to-be-sent data through a non-cellular mobile communication network.

According to the terminal device provided by the embodiment of the present application, the CP of the terminal device acquires the to-be-sent data, and the CP sends the acquired to-be-sent data through the non-cellular mobile communication network. After acquiring the to-be-sent data, the CP does not have to send the to-be-sent data to the AP, but directly sends the to-be-sent data to a network device through the non-cellular mobile communication network, thus avoiding the need to wake up the AP, thereby helping to reduce the power consumption of the AP.

Optionally, the to-be-sent data includes at least one of the following: session initiation protocol SIP signaling, voice data, video data, access stratum AS data, and non-access stratum NAS data.

The CP 11 of the terminal device is further configured to establish a non-cellular mobile communication network link between the terminal device and the network device; and
the CP 11 of the terminal device is further configured to send the to-be-sent data through the non-cellular mobile communication network link.

The CP 11 of the terminal device is specifically configured to:
receive an internet protocol IP address sent by the network device;
determine port information of the terminal device; and
establish, according to the IP address and the port information, the non-cellular mobile communication network link between the terminal device and the network device.

Optionally, the to-be-sent data includes session initiation protocol SIP signaling; and
the CP 11 of the terminal device is specifically configured to:
receive the session initiation protocol SIP signaling from the application processor AP 12 of the terminal device; or,
acquire the session initiation protocol SIP signaling locally.

Optionally, the to-be-sent data includes voice data; and
the CP 11 of the terminal device is specifically configured to:
receive the voice data from the application processor AP 12 of the terminal device; or,
require the voice data locally.

Optionally, the to-be-sent data includes video data; and
the CP 11 of the terminal device is specifically configured to:
receive the video data from the application processor AP 12 of the terminal device.

Optionally, the non-cellular mobile communication network includes a wireless-fidelity Wi-Fi network.

The above-described device can be used to execute the method provided in the above-described corresponding method embodiment, and the specific implementation and technical effect are similar, which will not be repeated here again.

FIG. 7 shows a possible schematic structural diagram of a terminal device of the present application, which is an embodiment not according to the invention. The terminal device 110 includes: an application processor 1121, a communication processor 1122, a communication interface 113 and a memory 111. Optionally, the terminal device 110 can further include a bus 114. The communication interface 113, the application processor 1121, the communication processor 1122 and the memory 111 can be connected to each other through the bus 114; the bus 114 can be a peripheral component interconnect (referred to as PCI) standard bus or an extended industry standard architecture (referred to as EISA) bus and the like. The bus 114 can be divided into an address bus, a data bus, a control bus and the like. For ease of presentation, only a thick line is used in FIG. 7, but it does not mean that there is only one bus or one type of bus.

The application processor 1121 and the communication processor 1122 can be, for example, a CPU, a general-purpose processor, a digital signal processor (DSP), an application-specific integrated circuit (ASIC), a field programmable gate array (FPGA) or other programmable logic devices, transistor logic devices, hardware parts or any combination thereof. They can implement or execute various exemplary logical blocks, modules, and circuits described in conjunction with the disclosure of the present application. The application processor 1121 and the communication processor 1122 can also be a combination for implementing computing functions, for example, a combination including one or more microprocessors, a combination of a DSP and a microprocessor, and the like.

In addition, a computer program is stored in the memory 111 and is configured to be executed by the processors 1121 and 1122. The computer program includes instructions for executing instructions of the method according to the embodiment shown in FIG. 3 or FIG. 4 above.

An embodiment of the present application also provides a computer-readable storage medium, where the computer-readable storage medium stores a computer program that enables a terminal device to execute the data sending method provided by the embodiment shown in the forgoing FIG. 3 or FIG. 4. The above-described readable storage medium can be implemented by any type of volatile or non-volatile storage device or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk or an optical disk

Finally, it should be noted that the above examples are only used to illustrate the technical solutions of the present application, but not to limit them; The invention is defined by the appended claims.

## Claims

1. A data sending method applied to a terminal device, wherein the terminal device comprises a communication processor, CP, and an application processor, AP, wherein a Wi-Fi network is linked to the CP, and the method comprises:
acquiring (301, 401), by the CP of the terminal device, to-be-sent data;
receiving, by the CP of the terminal device, an internet protocol, IP, address sent by a network device;
determining, by the CP of the terminal device, port information of the terminal device, wherein the port information is notified by the network device to the terminal device, or the port information is determined by the network device and the terminal device through mutual negotiation;
establishing, by the CP of the terminal device according to the IP address and the port information, the non-cellular mobile communication network link between the terminal device and the network device; and
sending (403), by the CP of the terminal device, directly the to-be-sent data through the non-cellular mobile communication network link, without sending the to-be-sent data to the AP of the terminal device.

2. The method according to claim 1, wherein the to-be-sent data comprises at least one of the following: session initiation protocol, SIP, signaling, voice data, video data, access stratum, AS, data and non-access stratum, NAS, data.

3. The method according to claim 1 or 2, wherein the to-be-sent data comprises session initiation protocol, SIP, signaling; and
the acquiring (301, 401), by the CP of the terminal device, the to-be-sent data comprises:
receiving, by the CP of the terminal device, the session initiation protocol, SIP, signaling from an application processor, AP, of the terminal device; or
acquiring, by the CP of the terminal device, the session initiation protocol, SIP, signaling locally.

4. The method according to claim 1 or 2, wherein the to-be-sent data comprises voice data; and
the acquiring (301, 401), by the CP of the terminal device, the to-be-sent data comprises:
receiving, by the CP of the terminal device, the voice data from an application processor, AP, of the terminal device; or
acquiring, by the CP of the terminal device, the voice data locally.

5. The method according to claim 1 or 2, wherein the to-be-sent data comprises video data; and
the acquiring, by the CP of the terminal device, the to-be-sent data comprises:
receiving, by the CP of the terminal device, the video data from an application processor, AP, of the terminal device.

6. The method according to claim 1 or 2, wherein the non-cellular mobile communication network comprises a wireless-fidelity, Wi-Fi, network.

7. A terminal device, wherein the terminal device comprises a communication processor, CP (11), and an application processor, AP (12), wherein a Wi-Fi network is linked to the CP (11), the CP (11) of the terminal device is configured to:
acquire to-be-sent data, receive an internet protocol, IP, address sent by a network device;
determine port information of the terminal device, wherein the port information is notified by the network device to the terminal device, or the port information is determined by the network device and the terminal device through mutual negotiation;
establish, according to the IP address and the port information, the non-cellular mobile communication network link between the terminal device and the network device; and
the CP (11) of the terminal device is further configured to send directly the to-be-sent data through the non-cellular mobile communication network link, without sending the to-be-sent data to the AP (12) of the terminal device.

8. The terminal device according to claim 7, wherein the to-be-sent data comprises at least one of the following: session initiation protocol, SIP, signaling, voice data, video data, access stratum, AS, data and non-access stratum, NAS, data.

9. The terminal device according to claim 7 or 8, wherein the to-be-sent data comprises session initiation protocol, SIP, signaling; and
the CP (11) of the terminal device is configured to:
receive the session initiation protocol, SIP, signaling from an application processor, AP (12), of the terminal device; or
acquire the session initiation protocol, SIP, signaling locally.

10. The terminal device according to claim 7 or 8, wherein the to-be-sent data comprises voice data; and
the CP (11) of the terminal device is configured to:
receive the voice data from an application processor, AP (12), of the terminal device; or
acquire the voice data locally.

11. A computer-readable storage medium, wherein the computer-readable storage medium stores a computer program, and the computer program when executed on a terminal device causes terminal device to execute the method according to any of claims 1-6.

## Patentansprüche

1. Datensendeverfahren, das auf eine Endgerätevorrichtung angewandt wird, wobei die Endgerätevorrichtung einen Kommunikationsprozessor (CP) und einen Anwendungsprozessor (AP) umfasst, wobei ein Wi-Fi-Netzwerk mit dem CP verbunden ist, und das Verfahren umfasst:
Erfassen (301, 401), durch den CP der Endgerätevorrichtung, von zu sendenden Daten;
Empfangen, durch den CP der Endgerätevorrichtung, einer Internetprotokolladresse (IP-Adresse), die durch eine Netzwerkvorrichtung gesendet wird;
Bestimmen, durch den CP der Endgerätevorrichtung, von Anschlussinformationen der Endgerätevorrichtung, wobei die Anschlussinformationen der Endgerätevorrichtung durch die Netzwerkvorrichtung mitgeteilt werden oder die Anschlussinformationen durch die Netzwerkvorrichtung und die Endgerätevorrichtung über gegenseitige Verhandlung bestimmt werden;
Herstellen, durch den CP der Endgerätevorrichtung gemäß der IP-Adresse und den Anschlussinformationen, der nicht zellularen Mobilkommunikationsnetzwerkverbindung zwischen der Endgerätevorrichtung und der Netzwerkvorrichtung; und
direktes Senden (403), durch den CP der Endgerätevorrichtung, der zu sendenden Daten über die nicht zellulare Mobilkommunikationsnetzwerkverbindung, ohne die zu sendenden Daten an den AP der Endgerätevorrichtung zu senden.

2. Verfahren nach Anspruch 1, wobei die zu sendenden Daten mindestens eines der Folgenden umfassen: Sitzungseinleitungsprotokollsignalisierung (SIP-Signalisierung), Sprachdaten, Videodaten, Zugangsschichtdaten (AS-Daten) und Nichtzugangsschichtdaten (NAS-Daten).

3. Verfahren nach Anspruch 1 oder 2, wobei die zu sendenden Daten die Sitzungseinleitungsprotokollsignalisierung (SIP-Signalisierung) umfassen; und
das Erfassen (301, 401), durch den CP der Endgerätevorrichtung, der zu sendenden Daten umfasst:
Empfangen, durch den CP der Endgerätevorrichtung, der Sitzungseinleitungsprotokollsignalisierung (SIP-Signalisierung) von einem Anwendungsprozessor (AP) der Endgerätevorrichtung; oder
lokales Erfassen, durch den CP der Endgerätevorrichtung, der Sitzungseinleitungsprotokollsignalisierung (SIP-Signalisierung).

4. Verfahren nach Anspruch 1 oder 2, wobei die zu sendenden Daten Sprachdaten umfassen; und
das Erfassen (301, 401), durch den CP der Endgerätevorrichtung, der zu sendenden Daten umfasst:
Empfangen, durch den CP der Endgerätevorrichtung, der Sprachdaten von einem Anwendungsprozessor (AP) der Endgerätevorrichtung; oder
lokales Erfassen, durch den CP der Endgerätevorrichtung, der Sprachdaten.

5. Verfahren nach Anspruch 1 oder 2, wobei die zu sendenden Daten Videodaten umfassen; und
das Erfassen, durch den CP der Endgerätevorrichtung, der zu sendenden Daten umfasst:
Empfangen, durch den CP der Endgerätevorrichtung, der Videodaten von einem Anwendungsprozessor (AP) der Endgerätevorrichtung.

6. Verfahren nach Anspruch 1 oder 2, wobei das nicht zellulare Mobilkommunikationsnetzwerk ein Wireless-Fidelity-Netzwerk (Wi-Fi-Netzwerk) umfasst.

7. Endgerätevorrichtung, wobei die Endgerätevorrichtung einen Kommunikationsprozessor (CP) (11) und einen Anwendungsprozessor (AP) (12) umfasst, wobei ein Wi-Fi-Netzwerk mit dem CP (11) verbunden ist, wobei der CP (11) der Endgerätevorrichtung konfiguriert ist zum:
Erfassen von zu sendenden Daten, Empfangen einer Internetprotokolladresse (IP-Adresse), die durch eine Netzwerkvorrichtung gesendet wird;
Bestimmen von Anschlussinformationen der Endgerätevorrichtung, wobei die Anschlussinformationen der Endgerätevorrichtung durch die Netzwerkvorrichtung mitgeteilt werden oder die Anschlussinformationen durch die Netzwerkvorrichtung und die Endgerätevorrichtung über gegenseitige Verhandlung bestimmt werden;
Herstellen, gemäß der IP-Adresse und den Anschlussinformationen, der nicht zellularen Mobilkommunikationsnetzwerkverbindung zwischen der Endgerätevorrichtung und der Netzwerkvorrichtung; und
wobei der CP (11) der Endgerätevorrichtung ferner konfiguriert ist, um die zu sendenden Daten über die nicht zellulare Mobilkommunikationsnetzwerkverbindung direkt zu senden, ohne die zu sendenden Daten an den AP (12) der Endgerätevorrichtung zu senden.

8. Endgerätevorrichtung nach Anspruch 7, wobei die zu sendenden Daten mindestens eines der Folgenden umfassen: Sitzungseinleitungsprotokollsignalisierung (SIP-Signalisierung), Sprachdaten, Videodaten, Zugangsschichtdaten (AS-Daten) und Nichtzugangsschichtdaten (NAS-Daten).

9. Endgerätevorrichtung nach Anspruch 7 oder 8, wobei die zu sendenden Daten die Sitzungseinleitungsprotokollsignalisierung (SIP-Signalisierung) umfassen; und
der CP (11) der Endgerätevorrichtung konfiguriert ist zum:
Empfangen der Sitzungseinleitungsprotokollsignalisierung (SIP-Signalisierung) von einem Anwendungsprozessor (AP) (12) der Endgerätevorrichtung; oder
lokales Erfassen der Sitzungseinleitungsprotokollsignalisierung (SIP-Signalisierung).

10. Endgerätevorrichtung nach Anspruch 7 oder 8, wobei die zu sendenden Daten Sprachdaten umfassen; und
der CP (11) der Endgerätevorrichtung konfiguriert ist zum:
Empfangen der Sprachdaten von einem Anwendungsprozessor AP (12) der Endgerätevorrichtung; oder lokalen Erfassen der Sprachdaten.

11. Computerlesbares Speichermedium, wobei das computerlesbare Speichermedium ein Computerprogramm speichert und das Computerprogramm, wenn es auf einer Endgerätevorrichtung ausgeführt wird, die Endgerätevorrichtung veranlasst, das Verfahren nach einem der Ansprüche 1 bis 6 auszuführen.

## Revendications

1. Procédé d'envoi de données appliqué à un dispositif terminal, dans lequel le dispositif terminal comprend un processeur de communication, CP, et un processeur d'application, AP, dans lequel un réseau Wi-Fi est lié au CP, et le procédé comprend :
l'acquisition (301, 401), par le CP du dispositif terminal, de données à envoyer ;
la réception, par le CP du dispositif terminal, d'une adresse de protocole Internet, IP, envoyée par un dispositif de réseau ;
la détermination, par le CP du dispositif terminal, d'informations de port du dispositif terminal, dans lequel les informations de port sont notifiées par le dispositif de réseau au dispositif terminal, ou les informations de port sont déterminées par le dispositif de réseau et le dispositif terminal par négociation mutuelle ;
l'établissement, par le CP du dispositif terminal en fonction de l'adresse IP et des informations de port, de la liaison de réseau de communication mobile non cellulaire entre le dispositif terminal et le dispositif de réseau ; et
l'envoi (403), par le CP du dispositif terminal, direct des données à envoyer par l'intermédiaire de la liaison de réseau de communication mobile non cellulaire, sans envoyer les données à envoyer à l'AP du dispositif terminal.

2. Procédé selon la revendication 1, dans lequel les données à envoyer comprennent au moins l'un parmi ce qui suit : signalisation de protocole d'initiation de session, SIP, données vocales, données vidéo, données de strate d'accès, AS, données de strate de non accès, NAS.

3. Procédé selon la revendication 1 ou 2, dans lequel les données à envoyer comprennent une signalisation de protocole d'initiation de session, SIP ; et
l'acquisition (301, 401), par le CP du dispositif terminal, des données à envoyer comprend :
la réception, par le CP du dispositif terminal, de la signalisation de protocole d'initiation de session, SIP, à partir d'un processeur d'application, AP, du dispositif terminal ; ou
l'acquisition, par le CP du dispositif terminal, de la signalisation de protocole d'initiation de session, SIP, localement.

4. Procédé selon la revendication 1 ou 2, dans lequel les données à envoyer comprennent des données vocales ; et
l'acquisition (301, 401), par le CP du dispositif terminal, des données à envoyer comprend :
la réception, par le CP du dispositif terminal, des données vocales à partir d'un processeur d'application, AP, du dispositif terminal ; ou
l'acquisition, par le CP du dispositif terminal, des données vocales localement.

5. Procédé selon la revendication 1 ou 2, dans lequel les données à envoyer comprennent des données vidéo ; et
l'acquisition, par le CP du dispositif terminal, des données à envoyer comprend :
la réception, par le CP du dispositif terminal, des données vidéo à partir d'un processeur d'application, AP, du dispositif terminal.

6. Procédé selon la revendication 1 ou 2, dans lequel le réseau de communication mobile non cellulaire comprend un réseau de norme IEEE 802.11B, Wi-Fi.

7. Dispositif terminal, dans lequel le dispositif terminal comprend un processeur de communication, CP (11), et un processeur d'application, AP (12), dans lequel un réseau Wi-Fi est lié au CP (11), le CP (11) du dispositif terminal est configuré pour :
acquérir des données à envoyer, recevoir une adresse de protocole Internet, IP, envoyée par un dispositif de réseau ;
déterminer des informations de port du dispositif terminal, dans lequel les informations de port sont notifiées par le dispositif de réseau au dispositif terminal, ou les informations de port sont déterminées par le dispositif de réseau et le dispositif terminal par négociation mutuelle ;
établir, en fonction de l'adresse IP et des informations de port, la liaison de réseau de communication mobile non cellulaire entre le dispositif terminal et le dispositif de réseau ; et
le CP (11) du dispositif terminal est en outre configuré pour envoyer directement les données à envoyer par l'intermédiaire de la liaison de réseau de communication mobile non cellulaire, sans envoyer les données à envoyer à l'AP (12) du dispositif terminal.

8. Dispositif terminal selon la revendication 7, dans lequel les données à envoyer comprennent au moins l'un parmi ce qui suit : signalisation de protocole d'initiation de session, SIP, données vocales, données vidéo, données de strate d'accès, AS, et données de strate de non accès, NAS.

9. Dispositif terminal selon la revendication 7 ou 8, dans lequel les données à envoyer comprennent une signalisation de protocole d'initiation de session, SIP ; et
le CP (11) du dispositif terminal est configuré pour :
recevoir la signalisation de protocole d'initiation de session, SIP, à partir d'un processeur d'application, AP (12), du dispositif terminal ; ou
acquérir la signalisation de protocole d'initiation de session, SIP, localement.

10. Dispositif terminal selon la revendication 7 ou 8, dans lequel les données à envoyer comprennent des données vocales ; et
le CP (11) du dispositif terminal est configuré pour :
recevoir les données vocales à partir d'un processeur d'application, AP (12), du dispositif terminal ; ou
acquérir les données vocales localement.

11. Support de stockage lisible par ordinateur, dans lequel le support de stockage lisible par ordinateur stocke un programme informatique, et le programme informatique, lorsqu'il est exécuté sur un dispositif terminal, amène le dispositif terminal à exécuter le procédé selon l'une quelconque des revendications 1 à 6.
